Europäisches Patentamt

European Patent Office

Office européen des brevets

(11) Publication number: **0 283 192**
**A1**

## (12) EUROPEAN PATENT APPLICATION

(21) Application number: **88302007.5**

(22) Date of filing: **08.03.88**

(51) Int. Cl.⁴: **F16L 55/16**

(30) Priority: **20.03.87 GB 8706657**

(43) Date of publication of application:
**21.09.88 Bulletin 88/38**

(84) Designated Contracting States:
**AT BE CH DE ES FR GB GR IT LI LU NL SE**

(71) Applicant: **BTR plc**
**Silvertown House Vincent Square**
**London SW1P 2PL(GB)**

(72) Inventor: **Woodhouse, Ian**
**5 Jordan Avenue Stretton**
**Burton on Trent Staffordshire DE13 0JA(GB)**
Inventor: **Gillham, Michael Charles**
**11 Croydon Road**
**Selly Oak Birmingham(GB)**

(74) Representative: **Sparrow, Alvar Alfred et al**
**BTR Group Patent & Trade Mark Service P.O.**
**Box 504**
**Erdington Birmingham B24 9QH(GB)**

(54) **Pipeline conditioning.**

(57) Gas pipelines are treated to prevent or seal leakages in yarn-and/or rubber-containing joints thereof by producing inside the pipeline a mist from a mixture comprising a joint-conditioning agent and a liquefied gas propellant in a weight ratio range of 3:1 to 9:1 by injection through a mist-producing nozzle inserted through the pipeline wall. Apparatus for producing a mist of joint-conditioning agent inside a gas pipeline (10) comprises a cylindrical gland unit (1) for attachment to a hole in the pipeline wall and, extending through the unit and located therein by gas-tight seals (4,5), a conditioning agent delivery tube (3) having a spray nozzle (6) at its proximal end, the gland unit being of size for assembly with the housing body (11a,11b) of under-pressure drilling equipment.

Fig. 1.

## PIPELINE CONDITIONING

This invention relates to the conditioning of pipelines, particularly gas pipelines, and more particularly to the conditioning of joints in pipelines to produce or maintain an effective seal against leakage.

Gas pipeline joints comprising wound yarn, typically jute or hemp yarn, and/or rubber seals, are subject to leakage with time, for example as a result of ground movement or drying out of the yarn or rubber. The leakage risk is especially high in pipelines carrying relatively dry gas for domestic use, such as natural gas (e g North Sea gas).

Various means have been proposed for sealing leakages in gas pipelines, both for general pipeline leakages and specifically for leakages in pipeline joints, by treating the pipeline internally with sealing or conditioning agents. For instance, it has been proposed to apply a lining coat of a general sealant such as a plastics or resin material from a foam sprayed into the pipeline. Also, it has been proposed to condition pipeline joints by introducing into the pipeline a preformed fog or mist of a joint-conditioning agent such as glycol, or by spraying a mixture of certain conditioning agents and liquefied gas into the pipeline.

The application of a lining coat to a pipeline often is unnecessarily costly for pipelines in which only the joints require treatment, and often necessitates decommissioning of the pipeline for effective treatment. Proposals for the production of a fog or mist of a joint-treatment agent for introduction into the pipeline often require complex fog-producing equipment or may have the disadvantage of variation in the concentration of the introduced fog. One previously proposed joint treatment comprises mixing a treatment agent such as a hydrocarbon oil with a liquified gas and spraying the mixture through a nozzle such as a conventional fuel oil burner nozzle into the pipeline by means of its own vapour pressure, the advocated ratio of treatment agent to liquefied gas being between 2:1 and 1:10 and more preferably between 1:2 and 1:5, by weight. It is found that the employment of such ratios necessitates introduction of a large quantity of the mixture over a long period of time to achieve satisfactory low-risk leakage at pipeline joints.

Also, in practice, joint treatment by introduction into the pipeline of a joint-treatment agent such as glycol by a fogging technique usually has been from treatment plants sited at regional gas depots or at large governor sites. Thus they have the disadvantages of being large and expensive and of occurring infrequently in the gas distribution system such that pipeline joints remote from the plant are not conditioned satisfactorily.

An object of the present invention is to provide a method and apparatus for treating gas pipelines to condition yarn-and/or rubber-containing joints to prevent or seal leakages at the joints quickly, simply and economically and without decommissioning the pipeline.

A further object of the present invention is to provide gas pipeline joint conditioning means wherein a relatively concentrated mist of joint-conditioning agent is produced inside the pipeline without significant concentration variation.

A further object of the present invention is to provide gas pipeline joint conditioning means which can be employed conveniently at localised sites to confer substantially uniform conditioning of the joints.

A further object of the present invention is to provide pipeline treatment apparatus which can be used in the housings of conventional under-pressure drilling equipment employed to drill "live" gas pipelines.

A further object of a preferred embodiment of the present invention is to provide controlled flow of joint-conditioning agent into a gas pipeline.

An additional object of the present invention is to provide pipeline joint conditioning means which have a high level of safety when applied to "live" gas pipelines and which minimise the risk of operatives coming into direct contact with gas from the pipelines and the risk of operatives ingesting or inhaling the conditioning agent.

These and other objects may be achieved by means of the invention described hereinafter.

According to one aspect of the present invention there is provided a method for treating a gas pipeline to prevent or seal leakages in yarn-and/or rubber-containing joints thereof, which comprises producing inside the pipeline a mist from a mixture comprising a joint-conditioning agent and a liquefied gas propellant in a weight ratio in the range of from 3:1 to 9:1 by injection through a mist-producing nozzle inserted through the pipeline wall.

According to another aspect of the present invention there is provided apparatus for producing a mist of joint-conditioning agent inside a gas pipeline, comprising a cylindrical gland unit having an outer diameter at its distal portion appropriate for forming a gas-tight seal in the housing body of under-pressure drilling equipment, means for connecting the proximal end of the gland unit to a hole in the pipeline wall, a joint-conditioning agent delivery tube surrounded by the gland unit and protruding from each end thereof, the distal end of the delivery tube being adapted for connection to a supply of gas-propelled joint-conditioning agent and the proximal end of the delivery tube being adapted to protrude into the pipeline through the hole, a mist-producing spray nozzle connected to the end of the delivery tube for insertion into the pipeline, and one or more annular gas-tight seals between the bore of the gland unit and the outer surface of the delivery tube.

Joint-conditioning agent employed in accordance with the invention are liquid agents which moisturise and swell the yarn and/or rubber employed in gas pipeline joints. The yarn usually is of jute or hemp and the rubber may be natural or synthetic. A typical joint-conditioning agent is mono-or di-ethylene glycol (generally termed 'glycol') but other conditioning agents which may be employed include water and hydrocarbon oils, especially mineral oils and light petroleum distillates.

Suitable propellants for the conditioning agent include propane and butane in liquefied form.

The ratio of conditioning agent to liquefied propellant gas in the mixture for production of the mist suitably is in the range of from 3:1 to 9:1, preferably from 4:1 to 6:1, for example 4:1, by weight.

The conditioning agent is produced in the pipeline as a mist, i e a suspension of finely divided liquid in the propellant gas. The admission rate and/or particle size of the conditioning agent admitted into the pipeline may be adjusted depending on factors such as pipeline size and gas flow velocity in the pipeline. Typical liquid particle sizes may be, for example, in the range of about 20 to 260 microns, and an example of a suitable average volume concentration of the mist spray on emission from the nozzle is about 0.087 percent.

The liquefied propellant preferably is contained in intimate contact with the conditioning agent for the production of the mist, i e both the conditioning agent and the propellant are in a single pressurised container, but alternatively it may be in a separate container connected to a supply of the conditioning agent.

The conditioning agent may be admitted into the pipeline at or near to the position of a joint to be conditioned or up to a considerable distance away from the joint, for instance up to 3 kilometres away, the travel of the conditioning agent in the pipeline being assisted by the normal gas flow in a "live" pipeline. In a typical gas pipeline for domestic supply the joints may be about 10 metres apart and thus a large number of joints may be conditioned from a single injection point. Preferably the conditioning is employed continuously or frequently in order to maintain securely sealed joints.

The conditioning agent may be introduced through holes specially drilled for the purpose or through existing (plugged) holes in the pipeline, for instance holes made for the purpose of "bagging off", i e for the introduction of an inflatable bag to block the gas flow temporarily such as while a fracture is being repaired down-line of the block, and holes remaining after a service connection, for example a domestic supply T-joint, has been removed.

In an advantageous embodiment of the invention, the connection of the conditioning agent supply equipment to a pipeline utilises the drilling equipment normally employed for drilling holes in pipelines, including the under-pressure drilling equipment normally employed to produce holes in "live" gas pipelines, for instance Wask and Pass equipment.

The drilling equipment typically comprises a drill, a drill housing body which usually is of substantially cylindrical or bell shape, the housing body having a removable (e g screw-threaded or bolt-retained) top portion (i e the portion remote from the pipeline) for insertion and removal of the drill head, a union or saddle comprising a pipeline-contacting surface of curvature corresponding to that of the portion of the pipeline to be drilled, a closable gas vent in the housing body wall, a gas-tight rotary throat seal for the drill spindle, a shut-off valve such as a gate-valve at the saddle end, and means to secure the saddle to the pipeline.

The securing means typically comprises a chain secured to the saddle, for passing around the pipeline. An alternative and preferred securing means is one which obviates the need for excavation underneath the pipeline. Such a means may comprise a magnetic clamp which is secured to the saddle by mechanical means and which is able to form a magnetic link with the top and/or sides of the pipeline.

The cylindrical gland unit of the apparatus in accordance with the invention has an outer diameter at its distal portion appropriate for forming a gas-tight seal with the housing body of the drilling equipment. Conveniently the seal may be formed utilising the rotary throat seal of the drilling equipment but, if desired, an alternatively or additional annular sealing means may be employed. The gland unit, which suitably may be metallic, may be of integral construction or may comprise two or more portions secured together. Preferably, for safety purposes, the gland unit has connected to it or integral with it a stop such as a shoulder or projection on its outer surface to prevent the unit from being blown out from the drill housing body during use on a "live" gas pipeline.

The means for connecting the proximal end of the gland unit to a pipeline hole usually is a threaded connection created by tapping after the drilling operation but alternatively may be for instance a spring-loaded bayonet connection or a remotely operated twist-lock lug connection of the type used on compressor hoses.

Extending through the gland unit and in gas-tight relationship therewith is a delivery tube for the propelled conditioning agent. The gas-tightness suitably is achieved by one or more annular high-pressure seals such as of rubber. Preferably the delivery tube is of non-sparking material such as a non-ferrous metal, for instance copper. An example of a suitable internal diameter of the delivery tube is about 2 mm, especially when the conditioning agent is glycol.

The delivery tube is connectable at its distal end to a supply of gas-propelled conditioning agent. As referred to hereinbefore, preferably both the conditioning agent and the propellant (in liquefied gas form) are contained in a single container. A suitable container for containing both the conditioning agent and propellant under pressure is of the type known as aerosol containers. Such containers should be capable of withstanding the internal pressure of the contained propellant and typically are of metallic cylindrical construction. The container may be of any size appropriate to the requirements of use. An example of an aerosol container sized for ease of use in conditioning gas pipeline joints with glycol is one having an internal volume of about 400 ml or a multiple thereof, to hold about 100 g or a multiple thereof of the glycol/propellant mixture.

Alternatively, the conditioning agent and the propellant may be supplied separately to the delivery tube such as from separate containers connected to the delivery tube by a union piece, e g a T-piece. For instance, the propellant may be in a portable container and the conditioning agent may be in a bulk container which, if desired, may be mounted on a service vehicle.

The connection between the delivery tube and the supply of propelled conditioning agent may be for instance a screw-thread, bayonet-type (which may be spring-loaded) or twist-lock lug connection.

Preferably, the apparatus includes a flow-control valve for controlling the rate of flow of propelled conditioning agent through the delivery tube. A flow-control valve of known type suitable for pressurised liquid flow control may be employed. Conveniently, the flow-control valve may be located at the distal end of the delivery tube, such as at the connection of the delivery tube with the supply of propelled conditioning agent.

When the supply of conditioning agent is from a container such as an aerosol container, the neck of the container may include a one-way valve which is actuated into its open position by connection of the delivery tube or flow-control valve. The flow-control valve may have a distal projection, such as of dome-shape, which opens the one-way valve during connection.

In an alternative embodiment, a flow-control valve may be omitted and the container outlet may have a plunger button (which may be disposable) fitted with a jet delivery tube having a lateral projection such as a shoulder or lug which meets a part of the pipeline connection equipment at a suitable stage during the connection of the delivery tube into the pipeline such that the resultant force on the projection as the connection is attained forces the tube towards the container and opens the one-way valve during the final stage of connection or when opening of the valve is desired.

If separate containers are employed, preferably each supply of the conditioning agent and the propellant is controlled by a flow-control valve.

The proximal end of the delivery tube is connected to a mist-producing spray nozzle. The spray nozzle preferably has a jet which is removable for cleaning or replacement, but alternatively the jet may be permanently attached in the nozzle. The spray nozzle may be detachably connected to the delivery tube, for example by a threaded connection, so that it can be detached for cleaning or for replacement for instance by a nozzle having a different orientation or jet size. Alternatively the nozzle may be permanently attached to the delivery tube, for instance by brazing or welding or even integral forming. An example of a suitable material of the nozzle is brass.

The spray nozzle may be in line with the delivery tube or may be oriented at an angle to it, and the nozzle jet typically is positioned perpendicularly to the main flow channel of conditioning agent in the nozzle but may be another angle to it or in line with it.

When positioned in the pipeline, the nozzle may be oriented to inject conditioning agent parallel to the longitudinal axis of the pipeline or towards the inner surface of the pipeline, especially the upper surface, for instance at an angle of 45 degrees to 60 degrees to the surface, so that the conditioning agent is deflected off the surface.

If desired, the nozzle may have more than one jet, each pointing in a different direction, and, if desired, more than one nozzle may be connected to the delivery tube.

A preferred jet diameter is in the range of from about 0.05 to about 0.08 cm (0.02 to 0.03 inch).

Usually, for the conditioning joints in "live" gas pipelines, the nozzle jet(s) would be directed down-flow of the gas in the pipeline.

Apparatus in accordance with the present invention is illustrated, by way of example only, in the accompanying drawings in which:-

Figure 1 shows, in diagrammatic partial cross-section, one form of the apparatus connected to a gas pipeline with the housing of typical under-pressure drilling equipment;

Figure 2 shows, in diagrammatic partial cross-section, another form of the apparatus connected to a gas pipeline with the housing of another typical under-pressure drilling equipment;

Figure 3a shows, in diagrammatic cross-section and on a scale larger than Figures 1 and 2, one form of spray nozzle suitable for use in the apparatus;

Figure 3b shows the section along the line A-A of Figure 3a viewed in the direction of the arrows;

Figure 4 shows, in diagrammatic cross-section and on a scale similar to that of Figures 3a and 3b, another form of spray nozzle suitable for use in the apparatus.

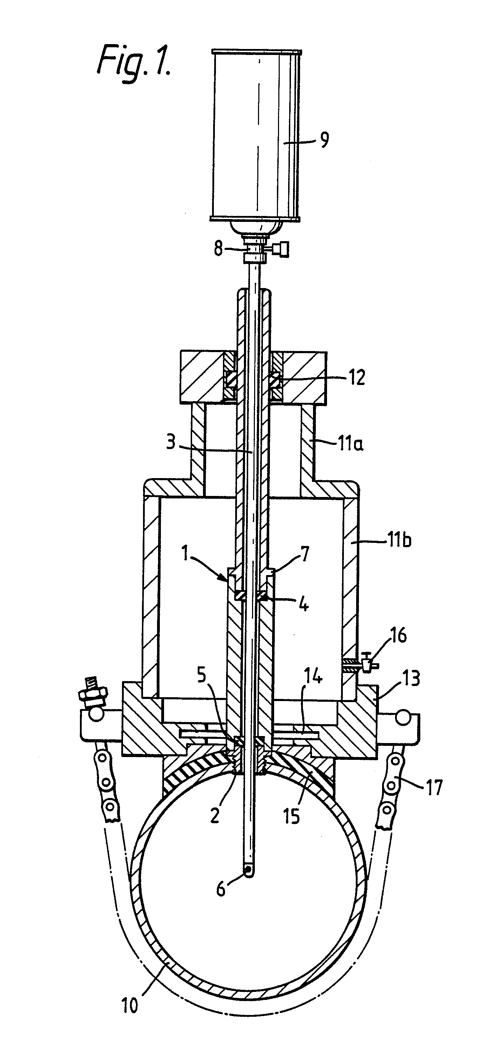

Apparatus in accordance with the invention as shown in Figure 1 comprises gland unit 1 having a threaded adapter 2 at its proximal end for connection to a complementary threaded hole in a gas pipeline, a conditioning agent delivery tube 3 located in gas-tight manner within the unit 1 by means of two high-pressure annular seals 4,5, and a mist-producing spray nozzle 6 connected to the proximal end of the tube 3. The gland unit 1 has an integral blow-out prevention shoulder 7 and the distal end of the tube 3 is shown connected via a flow-control valve unit 8 to a container 9 of aerosol can type for containing conditioning agent and liquefied gas propellant.

The gland unit 1 is shown connected to a "live" gas pipeline 10 utilising apparatus of under-pressure drilling equipment such as of the Pass type. The drilling equipment apparatus comprises a housing body 11a,11b in which the gland unit 1 is located in gas-tight manner by means of an annular seal 12 which may be the rotary throat seal normally employed in the equipment, and a drilling saddle 13 comprising a gate-valve the slot of which is denoted 14 and having a saddle portion comprising a rubber seal 15 of curvature corresponding to that of the portion of the pipeline 10 to which it is connected. The upper housing body portion 11a is secured to the lower housing body portion 11b by bolt retaining means (not shown) and the lower housing body portion 11b has a gas vent tap 16. The saddle 13 is shown secured to the pipeline 10 by chain-retention means 17.

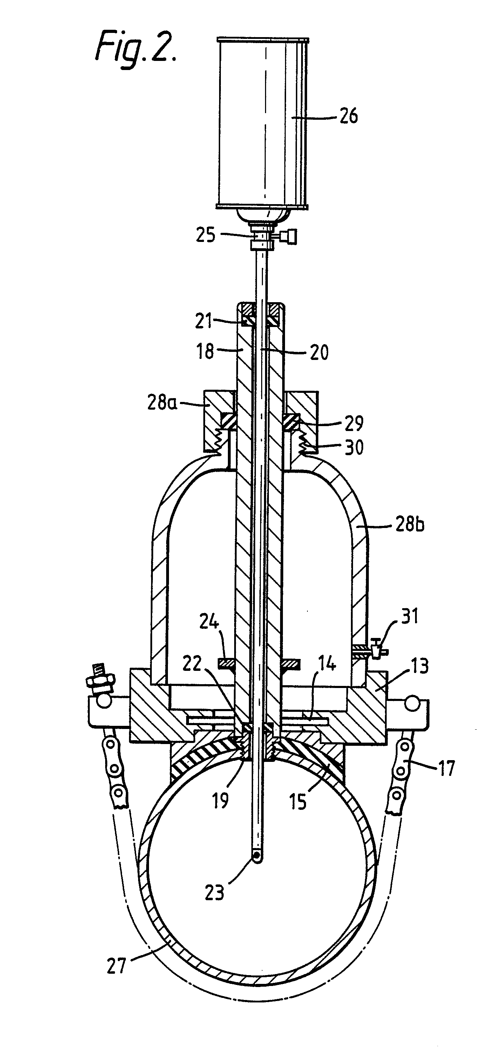

Apparatus in accordance with the invention is shown in Figure 2 comprises a cylindrical gland unit 18 having a threaded adapter 19 at its proximal end for connection to a complementary threaded hole in a gas pipeline, a conditioning agent delivery tube 20 located in gas-tight manner within the unit 18 by means of two high-pressure annular rubber seals 21, 22, and a mist-producing spray nozzle 23 connected to the proximal end of the tube 20. The gland unit 18 has a blow-out prevention ring 24 welded to it, and the distal end of the delivery tube 20 is shown connected via a flow-control valve unit 25 to a container 26 of aerosol can type for containing conditioning agent and liquefied gas propellant.

The gland unit 18 is shown connected to a "live" gas pipeline 27 utilising apparatus of under-pressure drilling equipment such as of the Wask type. The drilling equipment apparatus comprises a housing body 28a,28b in which the gland unit 18 is located in gas-tight manner by means of an annular seal 29 which may be the rotary throat seal normally employed in the equipment. The upper housing body portion 28a is secured to the lower housing body portion 28b by a threaded connection 30 and the lower housing body portion 28b has a gas vent tap 31. Other features denoted in Figure 2 by reference numerals 13,14, 15 and 17 are as described above with reference to Figure 1.

In the apparatuses of Figures 1 and 2, the flow-control valve unit 8,18 may be connected to the container 9,26 by screw-threading into the neck of the container, and the neck of the container may incorporate a one-way valve in which is opened by the action of the connection.

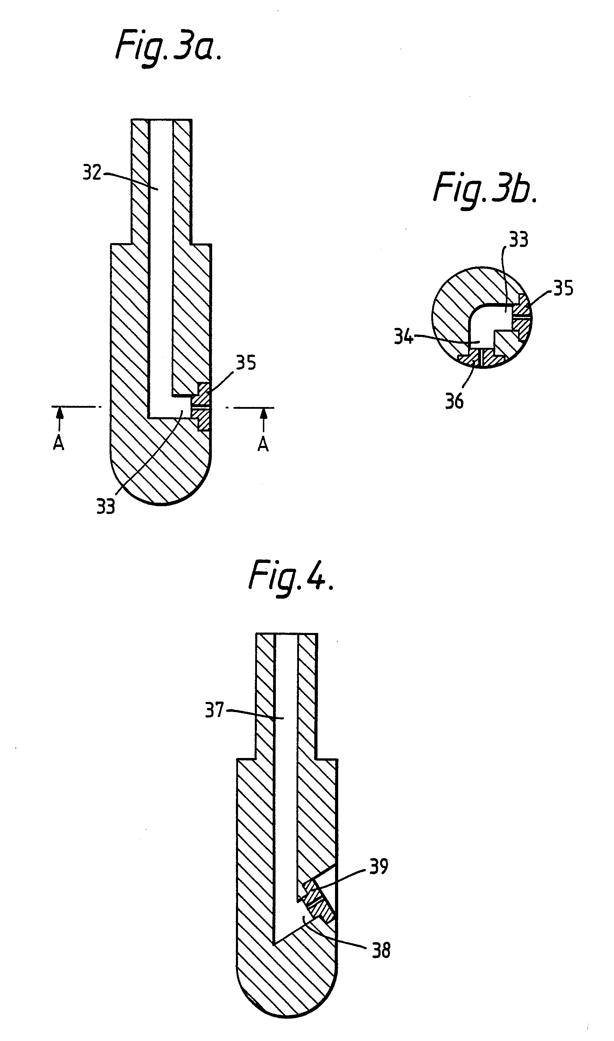

Figures 3a and 3b show a spray nozzle suitable as the spray nozzle 6 of Figure 1 or the spray nozzle 23 of Figure 2. The nozzle has a conditioning agent delivery main channel 32 which has two 90 degree laterally bifurcated outlet portions 33,34 each of which has a push-fitted mist-producing jet 35,36.

Figure 4 shows an alternative spray nozzle suitable as the spray nozzle 6 of Figure 1 or the spray nozzle 23 of Figure 2, having a conditioning agent delivery main channel 37 which has an acutely angled outlet portion 38 (such as at 30 degrees to the main channel portion 37) having a push-fitted mist-producing jet 39.

By way of example, and with reference to Figures 1 to 4, the present invention may be employed to condition joints in a "live" gas pipeline as follows:

Loose corrosion products are removed from the pipeline (10,17) surface at the site of the proposed injection point, a drilling saddle (13) having an appropriately curved seal (15) is secured to the site by a retaining means (17), the drill (not shown) and drill housing body (11a/11b,28a/28b) are assembled and fitted to the saddle, a hole is drilled in the pipeline and the hole is screw-threaded, the drill is withdrawn into the housing above the gate-valve slot (14) and the gate-valve is closed, the housing is vented by opening the gas vent tap (16,31), the drill spindle with bit (not shown) is removed from the housing, an appropriately sized gland unit (1,18) having annular seals (4,5,21,22) is inserted into the housing body through the rotary throat seal (12,29) in place of the drilling spindle, the delivery tube (3,21) with spray nozzle (6,23) is passed into the gland unit, the gland unit is connected to the drill head (not shown), the gate-valve is opened, the gland unit is lowered onto the injection site and threaded with the tapped hole using a threaded adapter (2,19), a container (9,26) or other supply of conditioning agent and propellant is connected to the delivery tube via a flow-channel valve (8,25) in closed position, the delivery tube is lowered into the pipeline, and the flow-control valve is opened to expel the conditioning agent through the delivery tube and out from the nozzle into the pipeline gas flow.

When sufficient conditioning agent has been injected into the pipeline, the flow-control valve is closed, the nozzle end of the delivery tube is withdrawn from the pipeline into the gland unit, the gland unit is unscrewed from the pipeline and is withdrawn above the gate-valve slot, the gate-valve is closed, the gas vent tap in the housing body is opened to release the gas pressure in the housing, the drill head, gland unit and delivery tube are removed, a plugging spindle (not shown) is fitted to the drill head and inserted into the housing body, the gas vent tap is closed, the gate-valve is opened, a plug (not shown) is screwed into the hole, and the drilling assembly is then removed from the pipeline.

**Claims**

1. A method for treating a gas pipeline to prevent or seal leakages in yarn-and/or rubber-containing joints thereof, which comprises producing inside the pipeline a mist from a mixture comprising a joint-conditioning agent and a liquefied gas propellant in a weight ratio in the range of from 3:1 to 9:1 by injection through a mist-producing nozzle inserted through the pipeline wall.

2. Method according to Claim 1 wherein the pipeline is a "live" gas pipeline.

3. Method according to Claim 1 or 2 wherein the conditioning agent is glycol.

4. Method according to Claim 1, 2 or 3 wherein the propellant is propane and/or butane.

5. Method according to any of the preceding Claims wherein the nozzle jet diameter is in the range of from 0.05 to 0.08 centimetre.

6. Apparatus for producing a mist of joint-conditioning agent inside a gas pipeline, comprising a cylindrical gland unit (1;18) having an outer diameter at its distal portion appropriate for forming a gas-tight seal in the housing body (11a,11b;28a,28b) of under-pressure drilling equipment, means for connecting the proximal end of the gland unit to a hole in the wall of the pipeline (10;27), a joint-conditioning agent delivery tube (3;20) surrounded by the gland unit and protruding from each end thereof, the distal end of the delivery tube being adapted for connection to a supply of gas-propelled joint-conditioning agent and the proximal end of the delivery tube being adapted to protrude into the pipeline through the hole, a mist-producing spray nozzle (6;23) connected to the end of the delivery tube for insertion into the pipeline, and one or more annular gas-tight seals (4,5;21,22) between the bore of the gland unit and the outer surface of the delivery tube.

7. Apparatus according to Claim 6 comprising a flow-control valve (8;25) for controlling the rate of flow of propelled conditioning agent through the delivery tube.

8. Apparatus according to Claim 6 or 7 comprising a container (9;26) containing a mixture of joint-conditioning agent and liquefied gas propellant connected to the distal end of the delivery tube.

9. Assembly of apparatus defined in any of Claims 6 to 8 in gas-tight relationship with the housing body (11a,11b;28a,28b) and saddle means (13) of under-pressure gas pipeline drilling equipment.

10. Method for treating a gas pipeline to prevent or seal leakages in yarn-and/or rubber-containing joints thereof, employing apparatus according to any of Claims 6 to 8 or the assembly according to Claim 9.

*Fig.1.*

*Fig.2.*

*Fig.3a.*

32

35

A    A

33

*Fig.3b.*

33

35

34

36

*Fig.4.*

37

39

38

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 570 795 (ATINAULT et al.) <br> * page 1, lines 1-19; page 2, lines 2-18; claim 1; figure * <br> --- | 1,2,6,7 | F 16 L 55/16 |
| A | DE-B-2 740 940 (LECHLER CHEMIE) <br> * column 2, lines 30-40; column 2, line 67 - column 3, line 17 * <br> --- | 1,3 | |
| A | DE-A-3 322 460 (THREE BOND CO.) <br> * claim; page 8, line 16 - page 9, line 13 * <br> --- | 1,3,4 | |
| A | FR-A-2 326 652 (WILLIAM PRESS & SON) <br> * page 1, lines 1-28; claims 1,2; figure 12 * <br> --- | 1,3,6,7 ,9,10 | |
| A | GB-A-1 482 200 (BRITISH GAS CORP.) <br> * page 1, lines 33-64; claim 1 * <br> --- | 1,6 | |
| A | US-A-3 842 864 (RIEGEL et al.) <br> ----- | | |

TECHNICAL FIELDS
SEARCHED (Int. Cl.4)

F 16 L 55/00
F 16 L 41/00

The present search report has been drawn up for all claims

| Place of search | Date of completion of the search | Examiner |
|---|---|---|
| BERLIN | 10-05-1988 | SCHAEFFLER C.A.A. |